# EUROPEAN PATENT SPECIFICATION

(11) **EP 2 981 717 B1**
(45) Date of publication and mention of the grant of the patent: **26.04.2017**
(21) Application number: 14711677.6
(22) Date of filing: 14.03.2014
(51) Int. Cl.: F03D 13/40

(54) **SUPPORT ELEMENT WITH AN ADJUSTABLE ATTACHMENT**
STÜTZE MIT EINER VERSTELLBARE VERRIEGELUNG
BUTEE AVEC VERROUILLAGE AJUSTABLE

(30) Priority: 25.03.2013 DK 201300171
(43) Date of publication of application: 10.02.2016
(73) Proprietor: Zülau A/S, 7430 Ikast (DK)
(72) Inventor: ZÜLAU, Palle Ulrich, DK-7430 Ikast (DK)
(74) Representative: Hoffgaard Rasmussen, Martin
(86) International application number: PCT/DK2014/050062
(87) International publication number: WO 2014/154220

(56) References cited:
- EP-A1- 2 418 376
- EP-A2- 2 567 865
- WO-A2-2009/141018

## Description

### FIELD OF THE INVENTION

The present invention relates to the area of wind turbine transportation. More specifically the invention relates to the area of equipment for transportation of the major structural components of a wind turbine that need to be transported from for example the manufacturing site to the operations site.

### BACKGROUND OF THE INVENTION

The area of transportation is a major factor in getting the parts of a wind turbine from the manufacturing sites to the operations site where the wind turbine is erected and commissioned. Transportation takes place on land, at sea and sometimes even by air.

In order to transport the often very large components, specialized transportation equipment and vehicles have been developed. When placing a wind turbine part on a vehicle, which may be a truck hanger or a ship, the wind turbine part is supported at its ends by blocks or other support devices having a shape corresponding to the shape of the part in contact with the support device.

Very often the placing on the blocks will result in an abrasion of the paint on the wind turbine part, which then need to be repaired before erecting the turbine or possibly soon after the erection. This is a very cumbersome and also a very costly procedure as the repair needs to be undertaken at conditions far from the manufacturing facility conditions and most often as a purely manual operation. Furthermore, a repair will never totally restore the factory quality of the surface coating.

The placement of the wind turbine component itself on the support devices further provides challenges as the usual way of lifting, e.g. a tower section, involves inserting a so-called J-hook into the tower section and lifting this from the inside of the tower section. This may, due to the significant weight of the tower section, bend or otherwise deform the tower, including the flange at the end of the tower section and thereby make a correct assembly of the tower at the erection site very difficult.

Hence, an improved transportation equipment would be advantageous, and in particular an equipment that would reduce the need for succesive repair works would be advantageous.WO2007/093854 A2 discloses a fixture to be connected to an end of a wind turbine blade or a wind turbine tower section. Said fixture allows for a high degree of flexibility with regards to the distribution of holes in the connection flange of the blade or tower section.

### SUMMARY OF THE INVENTION

Accordingly, the invention preferably seeks to mitigate, alleviate or eliminate the above mentioned disadvantages. In particular, it may be seen as an object of the present invention to provide transportation system that solves the above mentioned problems of the prior art with respect to wear and abrasion of the wind turbine components and further with respect to causing deformation of parts of the wind turbine component.

This object and several other objects are obtained in a first aspect of the invention by providing a support element for a wind turbine component, the support element comprising an abutment part and a block, wherein said abutment part has a substantially planar surface that is adapted to abut a planar surface of the wind turbine component and where the abutment part comprises holes for fastening devices, e.g. bolts, adapted to fasten the planar surface of the wind turbine component towards the essentially planar surface of the abutment part, wherein at least some of the holes are adapted for variable location of fastering devices, said variable location being optained by providing an oblong opening in the abutment part and furhter by arranging said block slidable in the oblong opening, where a hole for the fastening device is provided in the block, characteried in that said hole in the block has an oblong shape, allowing a bolt, when inserted thorugh the hole, to be moved in a direction perpendicular to the sliding direction of the block; thus allowing som dislocation of the bolt in the two directions..

By fastening the wind turbine component towards the planar surface of the support element, the contact surface between the support element and the wind turbine component will not comprise any of the painted outer surfaces of the wind turbine component and hence the otherwise frequently occuring repair works have been avoided. The planar surface of a wind turbine component that abuts the support element is normally a surface that is intended for abuttning another windturbine component at assembly and hence no harm will be done to this surface by the support device. Further, the support element may be provided with a substantial width and be fastened to the wind turbine component at multiple locations, hence distributing the forces when lifting equipment is used and engaging with the support element.

Advantageously at least some of the holes are adapted for variable location of fastening devices, e.g bolts, hereby enabling the accomodation of wind turbine components with different dimensions and different locations of corresponding holes or fastening bolts. Preferably each opening comprises recessed shoulders on which the block can slide along the oblong opening. By this measure the block may be slidably dislocated along the shoulders in a controlled manner.

Further preferred each oblong opening is extending essentially tangential to a circular configuration of all openings in the support element. This will facilitate the accomodation of wind turbine components with differenr hole spacing in the flanges.

In a further embodiment the support device comprises on its downward facing side one or more foot parts, adapted to maintain the support device in a stable position on a transport vehicle. Preferably fastening devices are provided for fixing the support device to the underlying support structure when placed in the right position, hereby ensuring the fixation of the wind turbine component.

In a further aspect of the invention a transport vehicle is foreseen, where the transport vehicle comprises at least one, preferably two of the support elements according to the invention for supporting a wind turbine component. The vehicle may be a truck or a truck hanger or may be a ship or a similar floating vessel. On a vehicle, support devices for more than one wind turbine component may be provided. In case of a truck, the number of components carried is normally limited to one due to the high weight of the component, whereas a floating vehicle may carry a significantly higher number of components, e.g to an erection site off shore.

These and other aspects of the invention will be apparent from and elucidated with reference to the embodiments described hereinafter.

### DECSRIPTION OF THE DRAWINGS

The present invention will now be explained, by way of example only, with reference to the accompanying figures, where
FIG. 1 shows a first embodiment of a support element according to the invention;
FIG. 2 shows a further embodiment of a support element according to the invention;
FIG. 3A and FIG. 3B shows a more detailed view of an opening for accomodation a displacable block, in an end view and in a sectional view;
FIG. 4A, FIG. 4B and FIG. 4C shows a displacable block for insertion in an opening in a support element, in an end view, in a sectional view and in a side view;
FIG. 5A and FIG. 5B shows a transport bracket to be attached to a support device according to the invention;
FIG. 6 schematically shows the support elements of FIG. 1 and FIG. 2 mounted on a wind turbine tower section.

### DETAILED DESCRIPTION OF AN EMBODIMENT

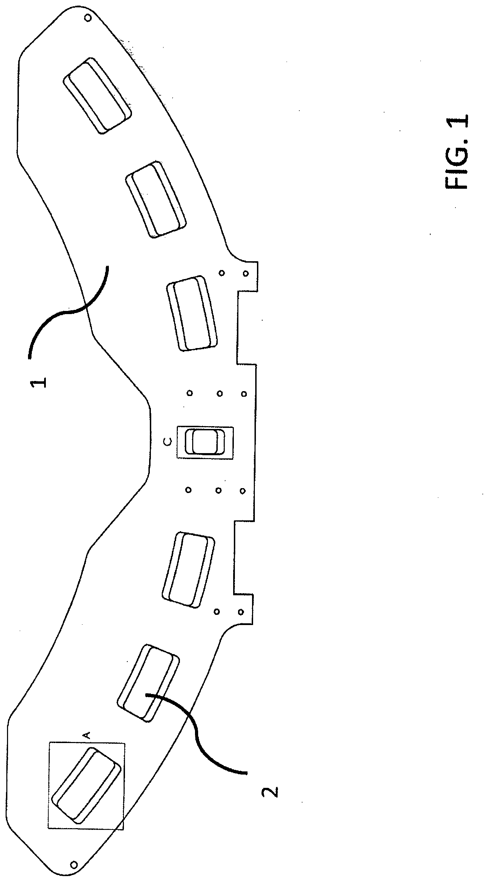

From FIG. 1 a first embodiment of a support device according to the invention appears. The support device comprises an abutment part 1, which has a planar end surface and extends in an generally part-circular shape. In the support device a number of openings 2 are provided, each of these with an oblong shape and with recessed shoulders 5 adapted to support blocks with holes for bolts. The oblong shaped openings 2 are located essentially tangentially to a circular shape with a radius essentially corresponding to the radius of a wind turbune component. The oblong shape of the openings 2 and the blocks that are slidable in these openings allow for a variation in the location of the holes provided in the blocks and hence allow for accomodation of wind turbine components with varying location of holes for bolts, which e.g. may be the case with different wind turbine manufacturers or when handling different types or models of wind turbines from the same manufacturer.

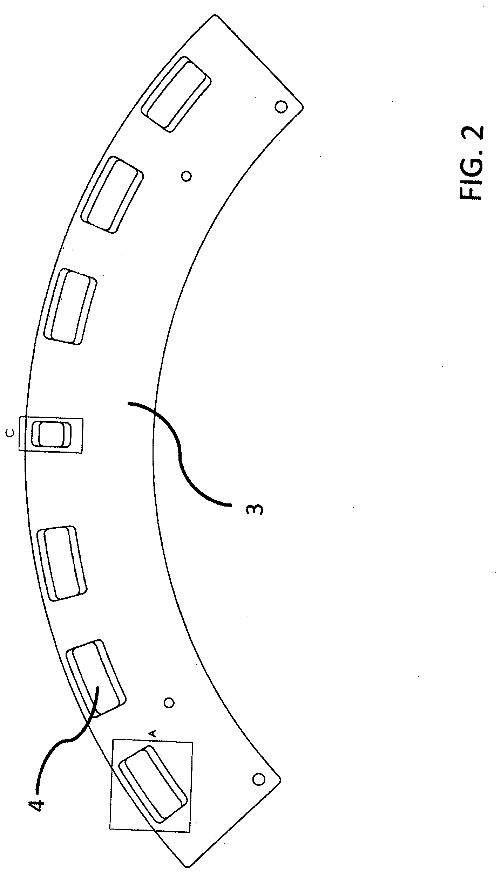

From FIG. 2 another support device appears. Like the previous support element device, this embodiment comprises an abutment part 3 with a planar end surface and extends in an generally part-circular shape. In the support device a number of openings 4 are provided, and as in the previous example the openings have an oblong shape and have recessed shoulders 5 adapted to support blocks with holes for bolts. The oblong shaped openings are located essentially tangentially to a circular shape with a radius essentially corresponding to the radius of a wind turbune component

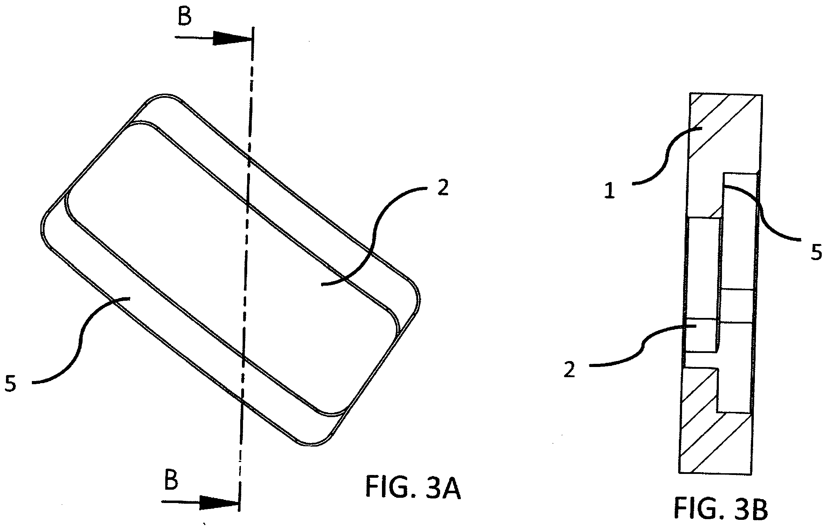

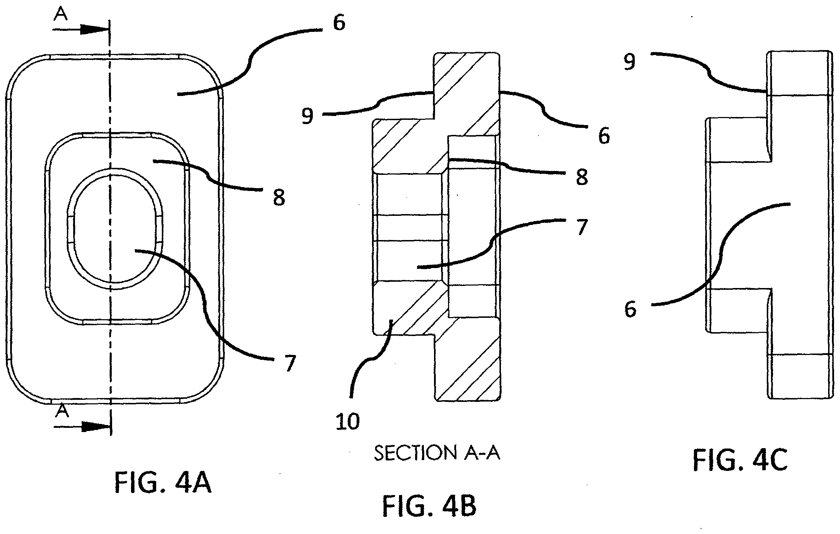

From FIG. 3A an opening 2 in an abutment part of a support device appears in more detail. It appears that the oblong opening along both sides have shoulders 5, that are recessed in the support device material. The function of the shoulders and the recess will be explained further in connection with FIG. 4.

From FIG. 3B the opening appear in a sectional view. The shoulders 5 and the depth of these from the surface of the outward facing side of the abutment part of the support device is shown.

From FIG. 4A a block 6 is depicted, which is adapted for insertion into the opening 2,4 and for accomodating a bolt that will extend through the opening and through a hole in the wind turbine component, e.g. a flange of a tower section. The hole 7 through the block 6 is oblong and hereby allows the bolt to be displaced slightly in a direction perpendicular to the longitudinal direction and hence allows for further flexibility in the use for different hole configurations in different wind turbine components. Around the hole 7 a recess is provided with a shoulder 8 that serves as a abutment for a bolt head. On the rearward facing part of the block 6 the surface 9, which faces and abuts the shoulders around the oblong openings in the abutment part, appears.

From FIG 4B the block 6 appear in a sectional view, where the through hole 7 appears.

From FIG. 4C the block 6 appear in a side view. The outmost part of the block has a larger width than the innermost, as the innermost part 10 is adapted for insertion through the opening 2,4 and the outermost part 9 is adapted for abutting the shoulders 5 along the opening 2,4. As the sides of the block 6 will abut the oblong opening in the support element when attempting to turn this, the block will not remove paint or material from the tower flange when fastened.

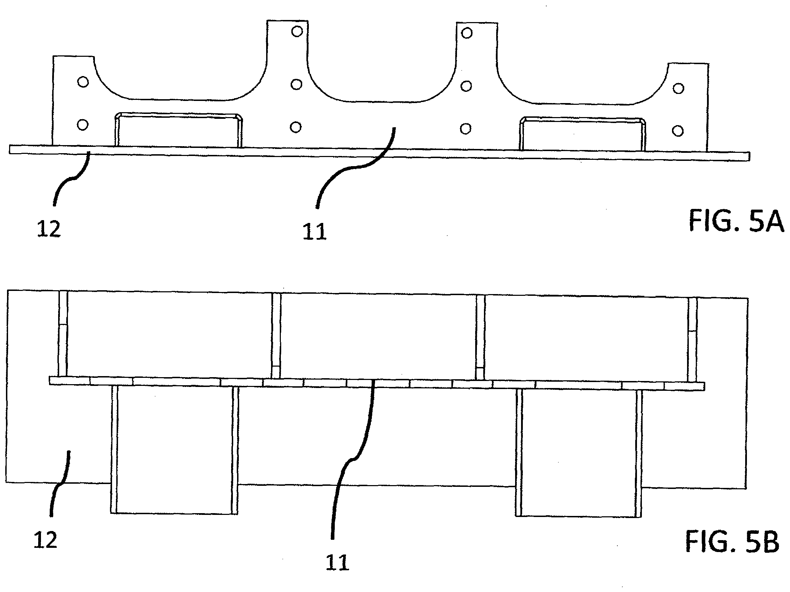

From FIG. 5A and 5B a transport bracket appears. The transport bracket 11 is adapted to be fastened to the abutment part 1 of the support device according to the invention. Further the transport bracket comprises a planar foot part 12, essentially perpendicular to the the bracket and adapted to support this on a transport vehicle. The fastening of the support device to the transport bracket preferably takes place through fastening with bolts, however a permanent connection between these elements may optionally be provided, e.g. through welding.

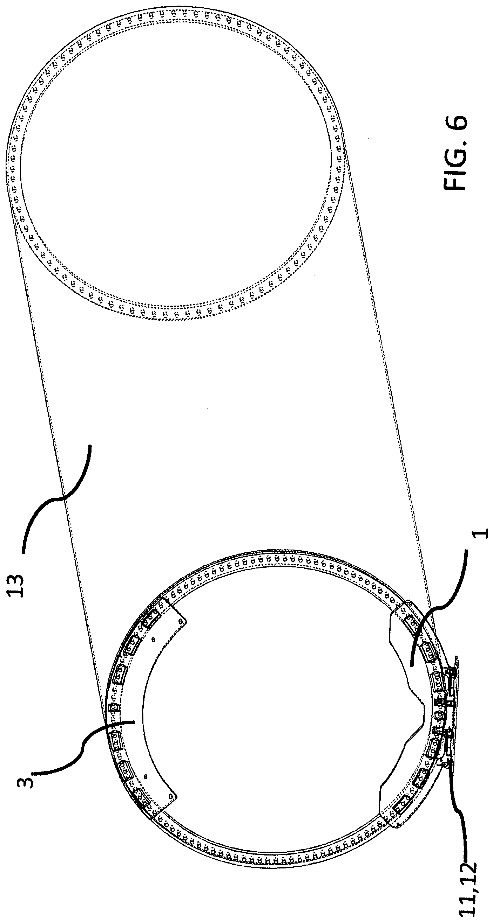

From FIG. 6 a tower section 13 of a wind turbine appears where a first embodiment 3 of the support device according to the invention is mounted on the top side of the flange and where a second embodiment 1 of the support device according to the invention is mounted at the lower side of the flange. In connection with this support device a transport bracket 11 with a foot part 12 as shown in FIG. 5 is mounted for providing a stable and safe support of the tower section on a transport vehicle. The top mounted support device 3 serves the purpose of enabling a deformation free lifting action on the tower section, when a lifting tool engages with the support device and the bottom mounted support device serves the purpose of supporting the tower section on a transport vehicle, e.g. a truck or a ship.

By mounting the support devices prior to the movement of these it is ensured that the support devices can be mounted in a reliable and quick manner. The top mounted device will provide rigidity to the flange and hence deformations are avoided and the bottom mounted device will support the tower section without risk of abrasion of the paint. Any contact with the tower section will be at surfaces that are not exposed to the environment afterwards.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. Support element for a wind turbine component, the support element comprising an abutment part (1) and a block (6), wherein said abutment part has a substantially planar surface that is adapted to abut a planar surface of the wind turbine component and where the abutment part comprises holes for fastening devices, e.g bolts, adapted to fasten the planar surface of the wind turbine component towards the essentially planar surface of the abutment part, wherein at least some of the holes are adapted for variable location of fastening devices, said variable location being obtained by providing an oblong opening (2) in the abutment part and further by arranging said block slidable in the oblong opening (2), where a hole (7) for the fastening device is provided in the block (6), **characterized in that** said hole in the block (7) has an oblong shape allowing a bolt, when inserted through the hole (7), to be moved in a direction perpendicular to the sliding direction of the block; thus allowing some dislocation of the bolt in two perpendicular directions.

2. Support element according to claim 1, where each opening (2) comprises recessed shoulders (5) on which the block can slide along the oblong opening.

3. Support element according to claim 2, where each oblong opening (2) is extending essentially tangential to a circular configuration of all openings in the support element.

4. Support element according to any of the preceding claims, where the support element further comprises a foot part (12) adapted to support the abutment part (1), and adapted for positioning the support element on a transport vehicle.

5. Transport vehicle for transporting a wind turbine component, comprising one or more of the support elements according to any of the preceding claims, said support elements being mounted on a carrying part of the vehicle.

6. Method for use of a support element according to any of the claims 1 - 4, where: the support element is mounted on the wind turbine component, the wind turbine component is lifted in place on a transport vehicle and supported on already mounted support elements.

## Patentansprüche

1. Stützelement für eine Windturbinenkomponente, das Stützelement umfassend ein Anschlagteil (1) und einen Block (6), wobei das Anschlagteil eine im Wesentlichen ebene Oberfläche aufweist, die ausgebildet ist, an einer ebenen Oberfläche der Windturbinenkomponente anzuliegen, und wobei das Anschlagteil Löcher für Befestigungsvorrichtungen, z.B. Bolzen, umfasst, die ausgebildet sind, die ebene Oberfläche der Windturbinenkomponente in Richtung der im Wesentlichen ebenen Oberfläche des Anschlagteils zu befestigen, wobei zumindest einige der Löcher für variable Lage der Befestigungsvorrichtungen ausgebildet sind, wobei die variable Lage durch Bereitstellen einer länglichen Öffnung (2) in dem Anschlagteil und weiterhin durch gleitbares Anordnen des Blocks in der länglichen Öffnung (2) erhalten wird, wobei ein Loch (7) für die Befestigungsvorrichtung in dem Block (6) vorgesehen ist, **dadurch gekennzeichnet, dass** das Loch in dem Block (7) eine längliche Form aufweist, die einem Bolzen, wenn er durch das Loch (7) eingesetzt ist, ermöglicht, in einer Richtung senkrecht zu der Gleitrichtung des Blocks bewegt zu werden; wodurch einige Versetzung des Bolzens in zwei senkrechte Richtungen ermöglicht wird.

2. Stützelement nach Anspruch 1, wobei jede Öffnung (2) vertiefte Schultern (5) umfasst, auf welchen der Block entlang der länglichen Öffnung gleiten kann.

3. Stützelement nach Anspruch 2, wobei sich jede längliche Öffnung (2) im Wesentlichen tangential zu einer kreisförmigen Konfiguration aller Öffnungen in dem Stützelement erstreckt.

4. Stützelement nach einem der vorhergehenden Ansprüche, wobei das Stützelement weiterhin ein Fußteil (12) umfasst, das zum Stützen des Anschlagteils (1) ausgebildet ist und das zum Positionieren des Stützelements auf einem Transportfahrzeug ausgebildet ist.

5. Transportfahrzeug zum Transportieren einer Windturbinenkomponente, umfassend ein oder mehrere Stützelemente nach einem der vorhergehenden Ansprüche, wobei die Stützelemente an einem tragenden Teil des Fahrzeugs angebracht sind.

6. Verfahren zur Verwendung eines Stützelements nach einem der Ansprüche 1 - 4, wobei: das Stützelement an der Windturbinenkomponente angebracht wird, die Windturbinenkomponente in Stellung auf ein Transportfahrtzeug angehoben wird und von bereits angebrachten Stützelementen gestützt wird.

## Revendications

1. Élément de support pour un composant d'éolienne, l'élément de support comprenant une partie formant butée (1) et un bloc (6), dans lequel ladite partie formant butée a une surface sensiblement plane qui est conçue pour être contiguë à une surface plane du composant d'éolienne et où la partie formant butée comprend des trous pour des dispositifs de fixation, par exemple des boulons, conçus pour fixer la surface plane du composant d'éolienne vers la surface sensiblement plane de la partie formant butée, dans lequel au moins certains des trous sont conçus pour des dispositifs de fixation à emplacement variable, ledit emplacement variable étant obtenu en prévoyant une ouverture oblongue (2) dans la partie formant butée et en agençant en outre ledit bloc pouvant coulisser dans l'ouverture oblongue (2), où on fournit un trou (7) pour le dispositif de fixation est prévu dans le bloc (6), **caractérisé en ce que** ledit trou dans le bloc (7) a une forme oblongue permettant à un boulon, quand il est inséré à travers le trou (7), d'être déplacé dans une direction perpendiculaire à la direction de coulissement du bloc ; permettant ainsi une certaine dislocation du boulon dans deux directions perpendiculaires.

2. Élément de support selon la revendication 1, où chaque ouverture (2) comprend des épaulements en retrait (5) sur lesquels le bloc peut coulisser le long de l'ouverture oblongue.

3. Élément de support selon la revendication 2, où chaque ouverture oblongue (2) s'étend sensiblement de manière tangentielle à une configuration circulaire de toutes les ouvertures dans l'élément de support.

4. Élément de support selon l'une quelconque des revendications précédentes, où l'élément de support comprend en outre une partie formant pied (12) conçue pour supporter la partie formant butée (1), et conçue pour positionner l'élément de support sur un véhicule de transport.

5. Véhicule de transport pour transporter un composant d'éolienne, comprenant un ou plusieurs des éléments de support selon l'une quelconque des revendications précédentes, lesdits éléments de support étant montés sur une partie de transport du véhicule.

6. Procédé pour utiliser un élément de support selon l'une quelconque des revendications 1 à 4, où : l'élément de support est monté sur le composant d'éolienne, le composant d'éolienne est soulevé en place sur un véhicule de transport et supporté sur des éléments de support déjà montés.
